# FASCICULE DE BREVET EUROPEEN

(11) **EP 4 485 262 B1**
(45) Date de publication et mention de la délivrance du brevet: **29.07.2026**
(21) Numéro de dépôt: 24181034.0
(22) Date de dépôt: 10.06.2024
(51) Int. Cl.: G06F 21/72, G06F 21/60

(54) **MODULE ÉLECTRONIQUE CONNECTABLE COMPRENANT DES GRAPPES D'ÉLÉMENTS SÉCURISÉS**
ANSCHLIESSBARES ELEKTRONISCHES MODUL MIT SICHEREN ELEMENTCLUSTERN
CONNECTABLE ELECTRONIC MODULE COMPRISING CLUSTERS OF SECURE ELEMENTS

(30) Priorité: 29.06.2023 FR 2306916
(43) Date de publication de la demande: 01.01.2025
(73) Titulaire: IDEMIA France, 92400 Courbevoie (FR)
(72) Inventeur: COURQUIN, Yannick, 92400 COURBEVOIE (FR); BOURDARAUD, Vincent, 92400 COURBEVOIE (FR)
(74) Mandataire: Idemia

(56) Documents cités:
- EP-A1- 3 663 945
- US-A1- 2020 177 384
- US-A1- 2021 409 211

## Description

### Domaine technique

La présente invention concerne un module électronique connectable comprenant des grappes d'éléments sécurisés.

### Arrière-plan technique

Il est courant d'utiliser des modules matériels de sécurité, en anglais « Hardware Security Module » ou « HSM », sous la forme de dispositifs physiques ou virtuels de calcul offrant des fonctions cryptographiques pour l'exécution de de de certaines tâches, telles que :
- la gestion, l'importation, l'exportation et la sauvegarde de clés cryptographiques ;
- le traitement de données cryptées, par exemple le décryptage des données ou l'exécution de fonctions de signatures numériques ;
- le délestage des serveurs d'applications pour accomplir des opérations cryptographiques symétriques ou asymétriques.

Les modules matériels de sécurité fournissent une interface spécifique et restreinte aux seuls utilisateurs ou entités autorisés pour le contrôle des données qu'ils génèrent et l'accès aux données qui y sont stockées.

Lorsqu'ils sont implémentés dans des architectures réseaux, les modules sont généralement sous la forme de cartes cryptographiques embarquées munies d'une interface de communication du type, par exemple, PCMCIA, PCI, PCI-express, USB ou SCSI/IP.

US 9 355 280 B2 [BROADCOM CORP [US]] 31.05.2016 décrit un circuit intégré comprenant un module matériel de sécurité implémentant une zone sécurisée pour le stockage d'une clé unique d'un dispositif. La zone sécurisée permet de prévenir les accès non-autorisés à la clé unique. Le module comprend un processeur sécurisé pour le chiffrement et le déchiffrement de données au sein de la zone sécurisée, et une interface sécurisée pour la communication des données déchiffrées vers des ressources extérieures.

EP 3 663 945 A1 [IDEMIA France [FR]] 10.06.2020 décrit un module électronique connectable à un dispositif hôte comprenant un contrôleur de module configuré pour communiquer avec le dispositif hôte, et une ou plusieurs grappes d'éléments sécurisés connectés, au sein d'une même grappe, à un bus commun qui les relie au contrôleur de module. Le contrôleur de module est configuré pour convertir une opération cryptographique en une pluralité de tâches cryptographiques élémentaires similaires utilisant des informations différentes et pour piloter l'exécution des tâches cryptographiques élémentaires par les éléments sécurisés. Un tel module électronique est flexible et évolutif. Ses capacités de traitement cryptographique et de stockage peuvent être ajustées par l'ajout de nouveaux éléments sécurisés certifiés dans une grappe existante ou sous forme d'une nouvelle grappe sans qu'il soit nécessaire de renouveler sa certification.

Divers modules matériels de sécurité peuvent être interconnectés au sein d'un même environnement informatique distribué. A titre d'exemple illustratif, au sein d'un réseau, un ou plusieurs modules matériels de sécurité peuvent communiquer avec un serveur d'applications ou interface réseau par l'intermédiaire duquel lesdits modules matériels de sécurité sont en interface avec des services distincts. Les serveur d'application agit comme une passerelle procédant au tri et à la gestion des requêtes des services du réseau pour leur exécution par le ou les modules matériels de sécurité.

Il est courant de mettre à disposition des modules matériels de sécurité en tant que services dans une infrastructure informatique en nuage, en anglais « cloud » ou « cloud computing », hébergée par un fournisseur de ressources informatiques. Les modules matériels de sécurité hébergés peuvent être alloués dynamiquement selon différentes architectures logicielles, par exemple une architecture multi-tenant ou encore une architecture de virtualisation dans laquelle ils sont fournis sous forme de modules matériels de sécurité virtuels. Une fois alloués, ils peuvent être gérés et exploités à distance par les clients de l'infrastructure.

WO 2014/159750 A1 [AMAZON TECH INC [US]] 02.10.2014 décrit une méthode mise en œuvre par ordinateur pour ajouter, à la requête d'un client dont le réseau est hébergé auprès d'un fournisseur de ressources informatiques, un ou plusieurs modules matériels de sécurité au réseau dudit client. Les modules sont sélectionnés parmi une pluralité de modules matériels de sécurité disponibles auprès dudit fournisseur, et sont ajoutés et gérés par l'intermédiaire d'une interface de communication. Les identifiants des modules matériels de sécurité alloués à chaque client sont stockés dans une base de donnée.

WO 2015/069460 [MOTOROLA SOLUTIONS INC [US]] 14.05.2015 décrit une méthode pour mettre à disposition des modules matériels de sécurité en tant que services dans une solution informatique en nuage. Il est d'abord procédé à une segmentation, en une pluralité de modules matériels de sécurité virtuels, d'un nuage informatique fondé sur une architecture de modules matériels de sécurité. Un module matériel de sécurité virtuel, dit source, contenant un jeu initial d'informations d'authentification et de rôles, est sélectionné parmi la pluralité de modules matériels de sécurité virtuels puis alloué à chaque application en nuage. Un contrôleur de services oriente les requêtes de chaque application en nuage sont ensuite orientées vers le module matériel de sécurité virtuel alloué correspondant. L'allocation et l'accès aux modules matériels de sécurité virtuels sont gérés selon les besoins du nuage en ressources. L'utilisateur de chaque module virtuel peut également empêcher l'accès à ses propres ressources aux autres utilisateurs et du fournisseur de la solution informatique en nuage.

WO 2016/099644 A1 [PRIVATE MACHINES INC [US]] 23.06.2016 décrit une méthode de gestion de modules matériels de sécurité. Chaque module comprend un processeur cryptographique et est initialisé par le chargement d'une clé privée et d'un certificat de la clé publique. Lors de l'allocation des modules matériels de sécurité à un client, lesdits modules matériels de sécurité prouvent leur connaissance de la clé privée, et il est procédé à la vérification de leur certificat de clé publique. Chaque module matériel de sécurité authentifié pour allocation est ensuite reconfiguré et des informations d'identification sont communiquées au client auquel il est alloué.

US 2020 045028 A1 [AMAZON TECH INC [US]] 06.02.2020 décrit une méthode de gestion d'une flotte de modules matériels de sécurité implémentée dans une infrastructure informatique en nuage pour la mise à disposition, par virtualisation, de modules matériels de sécurité virtuels. La taille de la flotte peut être adaptée selon l'usage des ressources de la flotte sans qu'il y ait d'incidence pour les clients interagissant avec les modules matériels de sécurité virtuels.

US 2020 177384 A1 décrit un système comportant des modules matériels de sécurité stockant des clés maîtres. Les clés maîtres sont utilisées pour chiffrer des clés de chiffrement qui sont stockées en dehors des modules matériels de sécurité.

### Résumé de l'invention

### Problème technique

Un inconvénient majeur des solutions actuelles pour la mise à disposition des modules matériels de sécurité en tant que services dans une infrastructure informatique en nuage, qu'elle soit implémentée selon une architecture multi-tenant ou une architecture de virtualisation, est qu'il ne peut être garanti que les clés et autres données qui sont stockées et/ou générées par un client dans un ou plusieurs modules physiques soient isolées de celles des autres clients, stockées et/ou générées dans les mêmes modules, et que ces autres clients ne puissent y accéder. Le principe d'une architecture multi-tenant ou d'une architecture de virtualisation est la mutualisation, c'est-à-dire le partage, des ressources informatiques afin d'en optimiser la gestion et d'en réduire les coûts d'exploitation. Dans ce type d'architecture, afin d'isoler les données stockées et/ou générées par chaque client à l'aide une ressource logicielle et/ou matérielle mutualisée, par exemple un module matériel de sécurité physique ou virtuel, il est courant d'authentifier les accès à ladite ressource, d'en effacer les données en fin de session une fois qu'elles y ont été traitées, et/ou d'entreposer les données dans des bases de données physiquement ou virtuellement distinctes propres à chaque client. Toutefois, parce que la ressource est mutualisée, ces opérations échouent toutes à certifier, ou prouver, qu'un module matériel de sécurité physique est alloué à un unique client et/ou que les données qui y sont stockées et/ou générées soient physiquement isolées de celles des autres clients qui ont accès audit module.

Or, une utilisation courante des infrastructures en nuage est l'échange, entre clients de l'infrastructure, d'informations sensibles dont les accès peuvent être règlementées par des politiques strictes relatives à leur protection et leur confidentialité. Par exemple, une autorité publique ou une institution d'Etat, un organisme de certification ou un établissement bancaire peut avoir besoin de protéger ou générer certaines informations, telles que des clés cryptographiques et des certificats, pour authentifier et sécuriser des connections, via, notamment, des protocoles SSL/TLS, sur leurs plateformes pour l'échange ou le stockage d'informations personnelles ou confidentielles, ou encore pour valider des transactions financières. Dans certains cas, notamment pour l'échange de données exigeant un très haut niveau de confidentialité, et dont il faut certifier l'isolation vis-à-vis des tiers, les solutions actuelles pour la mise à disposition des modules matériels de sécurité en tant que services peuvent donc ne pas être adaptées.

Un autre inconvénient des solutions peut être leur manque de flexibilité et d'évolutivité dans la gestion des ressources physiques de l'infrastructure selon les besoins des utilisateurs. Par exemple, en cas d'une demande supplémentaire de ressources pour l'exécution d'opérations cryptographiques, il peut être nécessaire d'ajouter un ou plusieurs modules matériels de sécurité physiques dans l'infrastructure. Un tel ajout nécessite l'achat de nouveaux matériels et des opérations de maintenance sur l'infrastructure. Outre les coûts, cela peut engendrer des indisponibilités temporaires de certains équipements de l'infrastructure.

Par conséquent, il demeure un besoin d'une solution pour une protection accrue des données stockées et/ou générées par des clients à l'aide de modules matériels de sécurité mis à disposition en tant que services dans une infrastructure informatique en nuage. Cette solution permettra de répondre aux exigences de confidentialité et de sécurité dans l'échange de certaines informations sensibles. Idéalement, elle pourra être en outre flexible et évolutive afin de faciliter la gestion des ressources physiques de l'infrastructure.

### Solution technique

Dans un premier aspect de l'invention, il est fourni un module électronique connectable tel que décrit dans la revendication 1, les revendications dépendantes étant des modes avantageux de réalisation.

Dans un deuxième aspect de l'invention, il est fourni un système comprenant un module électronique selon un premier aspect de l'invention.

Dans un troisième aspect de l'invention, il est fourni une méthode de configuration d'un module électronique selon le premier aspect de l'invention.

Dans un quatrième aspect de l'invention, il est fourni une méthode de traitement de données dans un module électronique selon le premier aspect de l'invention.

Dans un cinquième aspect de l'invention, il est fourni un programme comprenant des instructions qui, lorsque le programme est exécuté par une unité de traitement de donnée, conduisent celui-ci à mettre en œuvre les étapes d'une méthode selon le troisième ou le quatrième aspect de l'invention.

Dans un sixième aspect, il est fourni un support d'information lisible par une unité de traitement de donnée comprenant des instructions qui, lorsqu'elles sont exécutées par une unité de traitement de donnée, conduisent ladite unité de traitement à mettre en œuvre les étapes d'une méthode selon le troisième ou le quatrième aspect de l'invention.

Dans un septième aspect, il est décrit une utilisation d'un module électronique selon le premier aspect de l'invention dans une infrastructure électronique en nuage, en particulier dans une infrastructure électronique en nuage implémentée selon une architecture single-tenant ou multi-tenant, ou selon une architecture de virtualisation.

### Avantages

Un avantage remarquable de l'invention est de fournir la possibilité mettre à disposition des éléments sécurisés en tant que services au sein d'une infrastructure informatique en nuage sans préjudice pour la confidentialité et la protection des données des clients du nuage. L'invention résout les problèmes inhérents à la mutualisation des ressources et permet d'allouer des éléments sécurisés à chaque client d'une manière exclusive en préservant l'association physique entre les éléments sécurisés et le client. Elle garantit ainsi le respect du principe d'isolation des données entre les clients de l'infrastructure.

Il a ainsi possible de prouver de manière univoque que tel élément sécurisé est affecté à tel client, et tout autre client tiers ne peut n'y accéder audit élément ni aux données qu'il contient ou traite. Même en cas d'incident tel qu'une corruption des données ou de la clé cryptographique maître par un tiers ou par un élément sécurisé alloué défectueux, ou encore un accès accidentel aux données par un élément sécurisé non alloué ou un autre client authentifié, les données restent inexploitables et les éléments sécurisés ne peuvent opérer correctement.

Un autre avantage de l'invention est d'offrir une solution flexible et évolutive pour une gestion optimale des ressources physiques de l'infrastructure permettant un niveau élevé de personnalisation, en particulier quant au nombre d'éléments sécurisés alloués, à chaque client. Dans une infrastructure informatique en nuage, il est possible d'allouer dynamiquement les éléments sécurisés en fonction des besoins des clients.

### Brève description des dessins

Figure 1 est une représentation schématique d'un exemple de module électronique.
Figure 2 est une représentation schématique d'un module électronique selon le premier aspect de l'invention.
Figure 3 est une représentation schématique d'un détail de la Figure 2.
Figure 4 est une représentation schématique d'un module électronique selon certains modes de réalisation du premier aspect de l'invention.

### Description détaillée des modes de réalisation

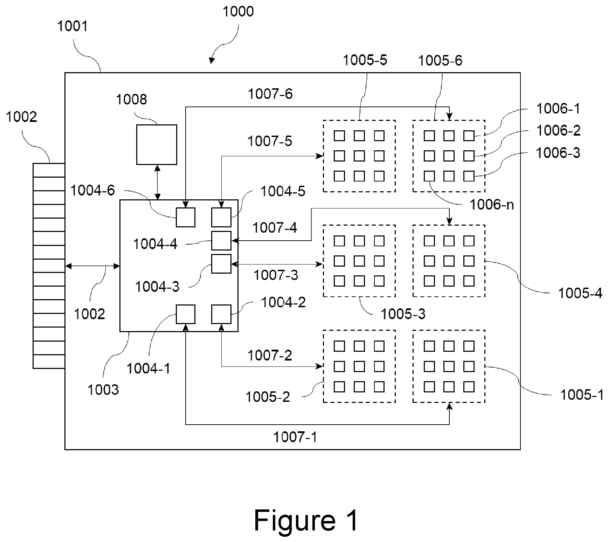

En référence à la Figure 1, extraite de EP 3 663 945 A1 [IDEMIA France [FR]] 10.06.2020, un exemple de module électronique 1000 comprend une carte électronique 1001, un moyen 1002 de connexion à un dispositif hôte, un contrôleur 1003 de module, un bus 1002 de communication reliant le moyen 1002 de connexion au contrôleur 1003 de module, une ou plusieurs grappes 1005-1 ; ... ; 1005-6, comprenant chacune une pluralité d'éléments sécurisés 1006-1 ; ... ; 1006-n connectés, au sein d'une même grappe 1005-1 ; ... ; 1005-6, à un même bus 1007-1 ; ... ; 1007-6 qui les relie au contrôleur 1003 de module, et une mémoire volatile 1008 de travail.

A titre d'exemple, le moyen 1002 de connexion à un dispositif hôte peut être une interface PCI ou encore PCI-Express. La mémoire volatile 1008 de travail peut être une mémoire RAM, « Random Access Memory ». Le bus 1007-1 ; ... ; 1007-6 reliant une grappe 1005-1 ; ... ; 1005-6 au contrôleur 1003 de module peut être un bus SPI, I2C, I3C, ISO ou UART. Le contrôleur 1003 de module peut alors comprendre, pour chaque grappe 1005-1 ; ... ; 1005-6, une interface 1004-1 ; ... ; 1004-6 de communication. Le bus 1002 de communication peut être de type PCI, PCI-Express, I2C ou encore I3C. Le contrôleur 1003 de module peut être un contrôleur programmable, tel qu'un contrôleur FPGE, « Field- Programmable Gate Array ». Il peut supporter des API, « Application Programming Interface », classiques pour communiquer avec le dispositif hôte, par exemple de type PKCS # 11, Open SSL, MS CAPI, Java JCE / JCA.

Chacun des éléments sécurisés 1006-1 ; ... ; 1006-n respecte généralement les normes de sécurité telles que FIPS 140-3/4, ISO/IEC 19790 : 2012, ISO/IEC 24759:2017, ISO/IEC 15408:2022, CC :2022 EUAL 4+, et/ou d'efficacité énergétiques telles que MEPS. De fait, le module électronique 1000 peut être certifié conforme à l'une ou plusieurs de ces normes. A titre d'exemple, les éléments sécurisés 1006-1 ; ... ; 1006-n peuvent être des contrôleurs sécurisés, « security controller » en anglais, des cartes à circuit intégré universel, « Universal Integrated Circuit Card » ou « UICC », des cartes à circuit intégré universel embarquées, « Embedded Universal Integrated Circuit Card » ou « eUICC ». Le dispositif hôte peut, par exemple, être un serveur comprenant une unité de traitement et un ou plusieurs modules électroniques 1000.

Pour l'exécution des tâches cryptographiques, la communication entre le contrôleur 1003 de module est les éléments sécurisés 1006-1 ; ... ; 1006-n de chaque grappe 1005-1 ; ... ; 1005-6 peut être une communication asymétrique, par exemple du type maître / esclave. Chaque élément sécurisé 1006-1 ; ... ; 1006-n d'une grappe 1005-1 ; ... ; 1005-6 se comporte alors comme un esclave vis-à-vis du contrôleur de module.

La taille des grappes 1005-1 ; ... ; 1005-6, c'est-à-dire le nombre d'éléments sécurisés 1006-1 ; ... ; 1006-n par grappe, est généralement conditionné par la capacité des interfaces 1004-1 ; ... ; 1004-6 de communication. A titre d'exemple, le nombre d'éléments sécurisés 1006-1 ; ... ; 1006-n d'une grappe peut inférieur ou égale au rapport entre la durée d'un traitement numérique, tel qu'un chiffrement, d'un paquet de données de taille donnée par un élément sécurisé donné et la durée transmission du paquet sur le bus 1007-1 ; ... ; 1007-6 de communication. Une optimisation de la bande passe passante entre chaque interface 1004-1 ; ... ; 1004-6 de communication 33 et la grappe 1005-1 ; ... ; 1005-6 correspondante d'éléments sécurisés 1006-1 ; ... ; 1006-n permet de minimiser le nombre d'interfaces 1004-1 ; ... ; 1004-6 de communication.

Les grappes 1005-1 ; ... ; 1005-6 peuvent être de taille identique ou de tailles différentes, c'est-à-dire comprendre un nombre identique ou différent d'éléments sécurisés 1006-1 ; ... ; 1006-n. De préférence, chaque grappe 1005-1 ; ... ; 1005-6 comprend un même nombre d'éléments sécurisés 1006-1 ; ... ; 1006-n pour simplifier la gestion des éléments sécurisés 1006-1 ; ... ; 1006-n par le contrôleur 1003 de module.

Pour un exécuter une opération cryptographique à la requête du dispositif hôte, le contrôleur 1003 de module décompose ou convertit cette opération en une pluralité de tâches cryptographiques élémentaires qu'il affecte aux éléments sécurisés à sa disposition. Ces tâches cryptographiques peuvent être exécutées en parallèle par les éléments sécurisés grâce notamment au multiplexage de commandes.

Dans un premier aspect de l'invention, en référence aux Figure 1, Figure 2 et Figure 3, il est fourni un module électronique 1000 connectable à un dispositif hôte 2001, ledit module électronique 1000 comprend :
- une ou plusieurs grappes 1005-1 ; ... ; 1005-6 d'éléments sécurisés 1006-1 ; ... ; 1006-6, chacun des éléments sécurisés 1006-1 ; ... ; 1006-6 d'une même grappe 1005-1 ; ... ; 1005-6 est connecté à un bus commun 1007-1 ; ... ; 1007-6 de communication associé à ladite grappe 1005-1 ; ... ; 1005-6 ;
- un contrôleur 1003 de module électronique configuré pour, d'une part, communiquer, avec le dispositif hôte 2001 et avec le bus commun 1007-1 ; ... ; 1007-6 de communication de chacune de grappes 1005-1 ; ... ; 1005-6, et d'autre part, pour piloter l'exécution d'opérations cryptographiques par un ou plusieurs éléments sécurisés 1006-1 ; ... ; 1006-6 ;
dans lequel :
- le contrôleur 1003 de module est en outre configuré pour allouer un ou plusieurs éléments sécurisés #1-1 ; ... ; #N-1 d'une ou plusieurs grappes 1005-1 ; ... ; 1005-6 à un ou plusieurs clients authentifiés C#1 ; ... ; C#N, chacun des éléments sécurisés alloués #1-1 ; ... ; #N-1 à chaque client authentifié C#1 ; ... ; C#N stocke localement une clé cryptographique maître unique CMK#1 ; ... ; CMK#N propre à chacun desdits clients authentifiés C#1 ; ... ; C#N ;
- chacun des éléments sécurisés alloués #1-1 ; ... ; #N-1 à chacun des clients authentifiés C#1 ; ... ; C#N met en œuvre une opération cryptographique OC à l'aide d'une clé cryptographique spécifique SK-#1-1 ; ... ; SK#N-1 à chacun des éléments sécurisés alloués #1-1 ; ... ; #N-1 ;
- chacun des éléments sécurisés alloués #1-1 ; ... ; #N-1 à chacun des clients authentifiés C#1 ; ... ; C#N est configuré pour déchiffrer les données d'entrée DE de opération cryptographique OC et/ou pour chiffrer les données de sortie DS de l'opération cryptographique OC à l'aide de la clé cryptographique maître unique CMK#1 ; ... ; CMK#N.

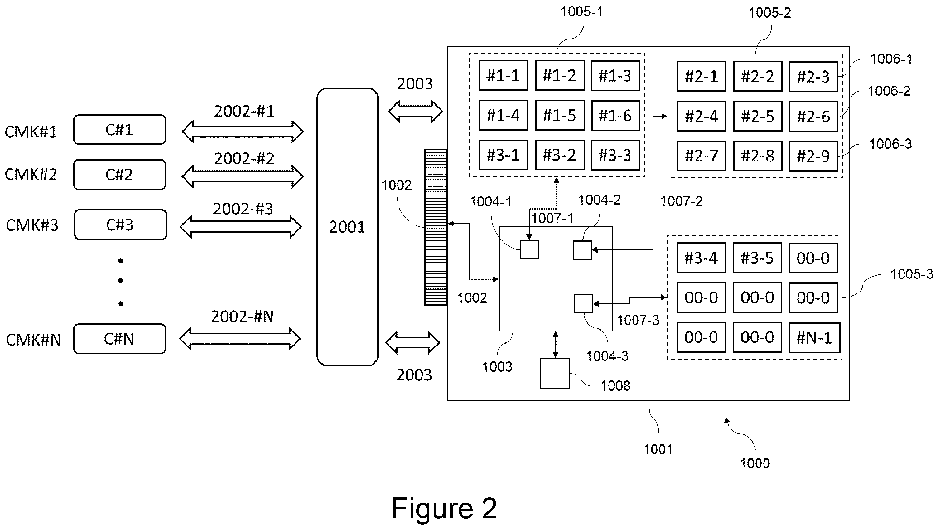

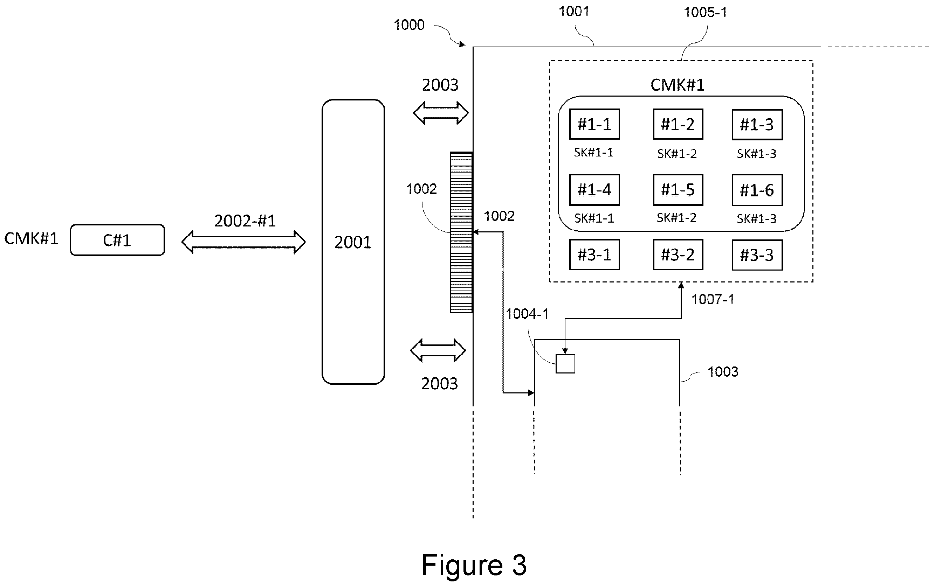

Pour des raisons de clarté, seuls une partie des grappes et des éléments sécurisés de la Figure 1 sont représentés sur les Figure 2 et Figure 3.

Par « client », il est en entendu un élément matériel ou logiciel qui envoie des requêtes pour accès à un service disponible sur un serveur au travers d'un réseau. Le client peut être un client léger ou un client lourd. En particulier, il peut être un ordinateur ou un programme. La notion de client peut couvrir, par extension, aussi bien l'élément matériel ou logiciel que la personne physique qui opère ledit élément.

Par « client authentifié », il est entendu un client dont l'identité a fait l'objet d'un enregistrement préalable sous la forme d'une signature ou d'un certificat, et dont l'identité est vérifiée, à chaque connexion au dispositif hôte ou au module électronique, à l'aide d'une méthode d'authentification adaptée. De préférence, l'authentification est une authentification forte à multi-facteurs (« MFA »), par exemple à deux facteurs (« 2FA »), notamment à l'aide d'un jeton physique, du type jeton logiciel, par exemple, un message textuel court (« SMS »), notifications poussées (« Push »), ou du type jeton matériel, par exemple jeton à mot de passe dynamique, jeton asynchrone, jeton à élément sécurité avec ou sans contact, tel qu'une carte à puce, une clé USB, une clé Bluetooth, une clé RFID ou une clé NFC, stockant des clés cryptographiques, des signatures électroniques ou des informations biométriques sur la personne physique associée au client. Une fois le client authentifié et connecté, des jetons numériques, par exemple des jetons WEB ou des témoins de connexion (« cookies ») peuvent être utilisés pour maintenir l'authentification au cours de la session de connexion.

Lorsqu'une connexion 2002-#1 ; ... ; 2002-#N est établie entre client authentifié et le dispositif hôte 2001 et/ou module électronique 1000, cette connexion 2002-#1 ; ... ; 2002-#N est généralement sécurisée, par exemple à l'aide des protocoles de type SSL/TLS. Selon les utilisations, la connexion 2002-#1 ; ... ; 2002-#N peut également être de type SSH. Elle peut également être établie au travers d'un VPN.

Par « opération cryptographique » ou « tâche cryptographique », il est entendu une opération de génération d'une clé cryptographique, une opération de chiffrement ou de déchiffrement, et/ou une opération de stockage d'une ou plusieurs clés cryptographiques. Les opérations cryptographiques peuvent mettent en œuvre différents types d'algorithmes cryptographiques tels que DES (Data Encryption Standard), 3DES (Triple DES), AES (Advanced Encryption Standard), RSA (Rivest, Shamir et Adelman), ECC (Cryptographie sur les courbes elliptiques), MD5 (Message Digest 5), SHA-1 (Secure Hash Algorithm 1), SHA-2, SHA-3 ou encore MAC.

Conformément à l'invention, le module 1003 de contrôle est configuré pour allouer un ou plusieurs éléments sécurisés #1-1 ; ... ; #N-1 d'une ou plusieurs grappes 1005-1 ; ... ; 1005-6 à un ou plusieurs clients authentifiés C#1 ; ... ; C#N, chacun des éléments sécurisés alloués #1-1 ; ... ; #N-1 à chaque client authentifié C#1 ; ... ; C#N stocke localement une même clé cryptographique maître unique CMK#1 ; ... ; CMK#N propre à chacun desdits clients authentifiés C#1 ; ... ; C#N.

Sur la Figure 2, les éléments sécurisés alloués à un client sont numérotés #X-Y, les référence #X et Y correspondent respectivement à l'identifiant du client #X, X étant égale à 1 à N, et au numéro Y de l'élément sécurisé dans la ou les grappes. Les éléments sécurisés référencés 00-0 ne sont pas alloués. A titre d'exemple illustratif, les éléments sécurisés #1-1 à #1-6 de la grappe 1005-1 sont alloués au client C#1 et stockent la même clé maître unique CMK#1, la totalité des six éléments sécurisés #2-1 à #2-9 de la grappe 1005-2 sont alloués au client C#2 et stockent la même clé maître unique CMK#2, les éléments sécurisés #3-1 à #3-5 des grappes 1005-1 et 1005-3 sont alloués au clients C#3 et stockent la même clé maître unique CMK#3, et l'élément sécurisé #N-1 de la grappe 1005-3 est alloué au client C#N et stockent la même clé maître unique CMK#N.

Le nombre d'éléments sécurisés alloués #1-1 ; ... ; #N-1 à chaque client authentifié C#1 ; ... ; C#N peut être préalablement défini par le client lui-même selon ses besoins, ou par un fournisseur de ressources informatiques chez lequel le dispositif hôte 2001, et donc un ou plusieurs modulées électroniques 1000, sont hébergés. Les éléments sécurisés #1-1 ; ... ; #N-1 alloués à chaque client peuvent être identifiés C#1 ; ... ; C#N dans une base de données BDD-1 dans laquelle l'identifiant de chaque élément sécurisé alloué #1-1 ; ... ; #N-1 est associé à un identifiant du client C#1 ; ... ; C#N auquel il est alloué. Cette base de données BDD-1, de préférence chiffrée, peut être stockée dans le dispositif hôte 2001 ou, de préférence, dans le contrôleur 1003 de module.

Selon des modes alternatifs ou complémentaires de réalisation, chaque élément sécurisé alloué #1-1 ; ... ; #N-1 peut stocker, de préférence dans son enclave sécurisé, l'identifiant, ou une empreinte cryptographique, du client C#1 ; ... ; C#N auquel il est alloué. Cet identifiant, ou son empreinte cryptographique, peut alors être communiqué avec les instructions et/ou les données transmises par le contrôleur 1003 de module aux modules sécurisés alloués #1-1 ; ... ; #N-1 pour l'exécution d'une opération cryptographique OC. Les modules sécurisés alloués #1-1 ; ... ; #N-1 peuvent être configurés pour vérifier l'identité du client C#1 ; ... ; C#N, ou son empreinte cryptographique, avant l'exécution de l'opération cryptographique OC requise.

Ces modes de réalisation sont particulièrement avantageux en ce qu'il procure un niveau de sécurité supplémentaire. Par exemple, lorsque des instructions d'un client authentifié sont susceptibles d'être envoyées par erreur, par exemple suite à une anomalie matérielle ou logicielle, à des éléments sécurisés non alloués audit client authentifié, seuls les éléments sécurisés ayant authentifier l'origine, c'est-à-dire le client, des instructions exécuteront les instructions. Ces modes de réalisation peuvent aussi être avantageux pour implémenter une communication de type « broadcast » des instructions lors l'exploitation du module électronique, les éléments sécurisés n'ayant pas authentifié leur origine n'exécuteront pas les instructions.

Au moment de l'allocation des éléments sécurisés 1006-1 ; ... ; 1006-6 par le contrôleur 1003 de module, une même cryptographique maître unique CMK#1 ; ... ; CMK#N propre à chaque client authentifié C#1 ; ... ; C#N est stockée localement dans chacun des éléments sécurisés alloués #1-1 ; ... ; #N-1. Pour des raisons de sécurité, cette même clé cryptographique maître unique CMK#1 ; ... ; CMK#N est, de préférence, stockée, en lecture seule, dans l'enclave sécurisée de chaque élément sécurisé alloué #1-1 ; ... ; #N-1, de manière à ce qu'elle ne puisse pas être communiquée en dehors de l'élément sécurisé. Elle peut être stockée de manière chiffrée par une clé spécifique propre à chaque élément sécurisé alloué #1-1 ; ... ; #N-1, elle-même stockée dans une enclave sécurisée, qui la déchiffrera au moment où il en aura besoin pour une opération cryptographique OC.

La clé cryptographique maître unique CMK#1 ; ... ; CMK#N propre stockée dans le ou les éléments sécurisés alloués #1-1 ; ... ; #N-1 à l'étape (b) peut être définie selon toute procédure adaptée. De préférence, cette définition peut être implémentée sous la forme d'une cérémonie des clés (« Key Ceremony » (KC)), de préférence en conformité avec selon les standards « Statement on Auditing Standards no.70 », (SAS70), « Statement on Standards for Attestation Engagements No.16 (SSAE 16) » et/ou encore « International Standard on Assurance Engagements 3402 (ISAE 3402) ». Eventuellement, une partie de la clé maître unique définie lors de la cérémonie peut être définie par le client auquel les éléments sécurisés sont alloués.

De par sa nature même, la clé cryptographique maître unique CMK#1 ; ... ; CMK#N propre à chaque client authentifié C#1 ; ... ; C#N n'est connue que des seuls éléments sécurisés alloués #1-1 ; ... ; #N-1 au client C#1 ; ... ; C#N et ne peut être exportée en dehors des éléments sécurisés alloués. Elle constitue une clé cryptographique commune, qui peut servir de moyens d'identification des éléments sécurisés alloués #1-1 ; ... ; #N-1 à un client authentifié donné C#1 ; ... ; C#N. Par exemple, en référence à la Figure 2, la clé cryptographique maître unique CMK#1 propre au client authentifié C#1 n'est connue que des seuls éléments sécurisés alloués #1-1 ; ... ; #1-6 et ne peut être exportée en dehors de ces seuls éléments sécurisés alloués #1-1 ; ... ; #1-6.

Conformément à l'invention, chacun des éléments sécurisés alloués #1-1 ; ... ; #N-1 à chaque client authentifié C#1 ; ... ; C#N met en œuvre une opération cryptographique à l'aide d'une clé cryptographique spécifique SK-#1-1 ; ... ; SK#N-1 à chaque élément sécurisé #1-1 ; ... ; #1-6. Cette clé spécifique SK-#1-1 ; ... ; SK#N-1 peut être générée à l'aide de tout algorithme cryptographique approprié, par exemple AES ou DES. A titre d'exemple illustratif, les éléments sécurisés #1-1 ; ... ; #1-6 alloués au client C#1 ont respectivement leur propre clé cryptographique spécifique SK-#1-1 ; ... ; SK-#1-6. La clé cryptographique spécifique SK-#1-1 est propre à chaque élément sécurisé alloué #1-1 ; ... ; #1-6 et n'est connue que d'eux. Selon certains modes de réalisation, ladite clé cryptographique spécifique SK-#1-1 ; ... ; SK#N-1 est dérivée de ladite clé cryptographique maître unique CMK#1 ; ... ; CMK#N propre à chacun des clients authentifiés C#1 ; ... ; C#N. Par exemple, chacun des éléments sécurisés #1-1 ; ... ; #1-6 alloués au client C#1 dérive leur clé cryptographique spécifique respective SK-#1-1 ; ... ; SK-#1-6 depuis la clé cryptographique maître unique qui leur est commune et propre au client C#1. La dérivation peut être dérivée à l'aide de toute fonction de dérivation appropriée, par exemple une fonction de hachage ou des fonctions de dérivation conformes aux normes ISO 18033 et PCKS#5. Elle peut aussi être une fonction de dérivation propriétaire certifiée conforme aux standards de sécurité en vigueur.

Selon certains modes avantageux de réalisation, les éléments sécurisés alloués #1-1 ; ... ; #N-1 à un client authentifié C#1 ; ... ; C#N peuvent être organisés selon un modèle de communication ou de contrôle asymétrique, notamment selon une relation maître-esclave. En référence à la Figure 2, un des éléments sécurisés, par exemple l'élément sécurisé #1-1 parmi ceux alloués #1-1 ; ... ; #N-1 à client authentifié C#1 ; ... ; C#N peut être défini comme un élément sécurisé maître, les autres éléments sécurisés alloués #1-2 ; ... ; #1-6 étant définis comme esclaves.

Ce type d'organisation peut être avantageux pour l'exécution d'opérations cryptographiques nécessitant les ressources de plusieurs éléments sécurisés en parallèle ou en série. L'exécution de certaines opérations cryptographiques peuvent être déléguée par le contrôleur 1003 de module à l'élément sécurisé esclave qui se charge leur déploiement auprès des éléments sécurisés esclaves. L'élément sécurisé maître peut alors valider une opération cryptographique et/ou la segmenter en opérations élémentaires, puis la faire suivre aux éléments sécurisés esclaves pour exécution.

Cette organisation selon un modèle maître/esclave est également avantageuse pour la maintenance des éléments sécurisés, tel qu'un d'un changement de configuration ou mise à jour des éléments sécurisés alloués à un client. Par exemple, le client peut requérir un changement d'algorithme de chiffrement, ou encore une mise à jour du système d'exploitation des éléments sécurisés. Cette requête peut d'abord être validée et exécutée par l'élément sécurisé maître qui la transmettra ensuite aux éléments sécurisés esclaves pour réplication du même changement. Conformément à certains modes de réalisation, lorsque l'identifiant, ou une empreinte cryptographique, du client est utilisé par authentifier l'origine des instructions, cette opération d'authentification peut également être affectée au seul élément sécurisé maître, réduisant ainsi la charge de travail des éléments sécurisés esclaves.

Dans un modèle maître / esclave, la clé cryptographique maître commune peut être avantageusement exploitée par l'élément sécurisé maître comme moyen d'indentification des éléments sécurisés esclaves alloués à un même client authentifié auquel ladite clé cryptographique maitre est associée. Lors d'une communication entre l'élément sécurisé maître et les autres éléments sécurisés, l'élément sécurisé peut vérifier, par exemple via une comparaison d'empreinte cryptographique tel qu'un haché (« hash »), que les éléments sécurisés avec lesquels il communique partagent la même clé cryptographique maître commune, et donc qu'ils appartiennent à la même « famille » ou « ferme » d'éléments sécurisés alloués à un même client authentifié.

Conformément à l'invention, chacun des éléments sécurisés alloués #1-1 ; ... ; #N-1 à chacun des clients authentifiés C#1 ; ... ; C#N est configuré pour déchiffrer les données d'entrée DE de l'opération cryptographique OC et/ou pour chiffrer les données de sortie DS de l'opération cryptographique OC à l'aide de la clé cryptographique maître unique CMK#1 ; ... ; CMK#N. Ainsi, les données échangées entre le client authentifié et les éléments sécurisés qui lui sont alloués ne sont jamais communiqués en « clair », c'est-à-dire non chiffré, et seuls les éléments sécurisés alloués ayant la même clé cryptographique maître commune sont capables de les déchiffrer. La confidentialité est donc parfaitement conservée. Ainsi, dans l'éventualité, par exemple, d'une corruption extérieure des données ou de la clé cryptographique maître par un tiers ou par un élément sécurisé alloué défectueux, ou encore d'un accès accidentel aux données par un élément sécurisé non alloué ou un autre client authentifié, les données restent inexploitables.

Selon des modes avantageux de réalisation, les éléments sécurisés 1006-1 ; ... ; 1006-6 sont des éléments sécurisés d'une même grappe d'éléments sécurisés 1005-1 ; ... ; 1005-6. Conformément à l'invention, les éléments sécurisés d'une même grappe sont connectés à un même bus commun de communication. Au sein d'une même grappe, la communication entre éléments sécurisé alloués, par exemple dans un modèle maître / esclave, et/ou avec le contrôleur de module peut-être plus optimale avec moins de temps de latence. Le contrôleur 1003 de module est également déchargé de la gestion et de l'ordonnément des instructions entre les éléments sécurisés alloués répartis dans des grappes différentes.

Les éléments sécurisés, et éventuellement le contrôleur de module, peuvent comprendre des interfaces de programmation d'application, en anglais « Application Programming Interface » (API), pour permettre aux applications clients tierces de requérir l'exécution d'opérations cryptographiques par le module électronique. De préférence ces interfaces respectent la norme PCKS #11, aussi appelés « cryptoki », et/ou la norme PCKS #15.

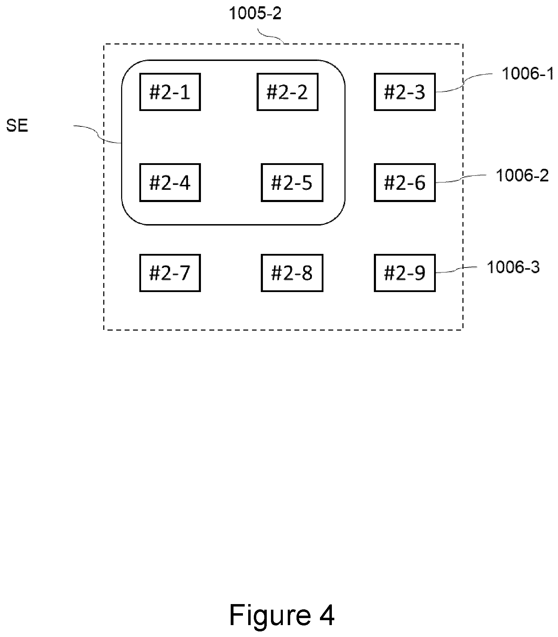

Selon certains modes de réalisation, en référence à la Figure 4, le contrôleur de module 1003 est configuré pour piloter, pour un ou plusieurs clients authentifiés C#1 ; ... ; C#N, l'exécution de l'opération cryptographique OC par un sous-ensemble SE d'éléments sécurisés choisis parmi les éléments sécurisés #1-1 ; ... ; #N-1 alloués auxdits clients authentifiés C#1 ; ... ; C#N.

A titre d'exemple illustratif, en référence à la Figure 4, un sous-ensemble SE comprenant les éléments sécurisés #2-1 ; #2-2 ; #2-4 et #2-5 du client authentifié C#2 est piloté par le contrôleur de module (non représenté) pour exécuter l'opération cryptographique OC.

Le nombre d'éléments sécurisés du sous-ensemble SE peut être défini de différentes façons. Il peut être défini par le dispositif hôte ou le contrôleur 1003 de module selon la complexité des opérations cryptographiques à exécuter ou de la charge globale du module électronique lorsque plusieurs opérations cryptographiques doivent être exécutées à la requête des clients. Il peut aussi être défini par l'élément sécurisé maître lorsque les éléments sécurisés alloués sont organisés selon un modèle maître / esclave. Dans tous ces cas, le nombre d'éléments sécurisés peut être peut-être avantageusement adapté pour une meilleure gestion des ressources du module électronique.

Le nombre d'éléments sécurisés du sous-ensemble SE peut également être défini par le client C#1 ; ... ; C#N lui-même, au travers du dispositif hôte 2001 ou du contrôleur 1003 de module selon des règles préalablement établies par le client en fonction de la nature et à la complexité des opérations cryptographiques. Ce mode de réalisation peut être avantageux afin de décharger le dispositif hôte 2001, le contrôleur 1003 de module et/ou les éléments sécurisés maîtres d'une telle gestion, et donc alléger la charge du module électronique.

Selon certains modes complémentaires de réalisation, le contrôleur 1003 de module est configuré pour piloter, pour un ou plusieurs clients authentifiés C#1 ; ... ; C#N, l'exécution d'une pluralité d'opérations cryptographiques OC par des sous-ensembles SE d'éléments sécurisés choisis parmi les éléments sécurisés #1-1 ; ... ; #N-1 alloués auxdits clients authentifiés C#1 ; ... ; C#N, chacune des opérations cryptographiques OC étant respectivement exécutée par un des sous-ensembles SE d'éléments sécurisés et le nombre d'éléments sécurisés de chacun des sous-ensembles étant défini par lesdits clients authentifiés C#1 ; ... ; C#N.

Ces modes de réalisation sont particulièrement avantageux lorsque le client authentifié a besoin que d'un nombre limité, par exemple deux ou trois, d'éléments sécurisés pour exécuter une opération ou souhaite affecter des opérations cryptographiques différentes aux éléments sécurisés qui lui sont alloués. Par exemple, parmi l'ensemble des éléments sécurisés alloués, il peut vouloir qu'un sous-ensemble SE comprenant un nombre donné, par exemple deux ou trois, d'éléments sécurisés soit affecté à la génération de clés cryptographiques tandis qu'un autre sous-ensemble SE d'un autre nombre d'éléments sécurisés soient affectés au chiffrement d'un jeu de données. Cela permet l'exécution simultanée d'une pluralité d'opérations cryptographiques par une gestion optimale des éléments sécurisés alloués, et une diminution des temps de traitement de l'ensemble des opérations cryptographiques. Il en résulte un gain de temps pour le client.

Selon des modes de réalisation complémentaires aux précédents, les opérations cryptographiques OC sont exécutées en parallèle et/ou en série par chacun des sous-ensembles SE d'éléments sécurisés. Les éléments sécurisés de chaque sous-ensemble peuvent opérer en série et/ou parallèle.

A titre d'exemple, un client souhaite chiffrer simultanément des séries de deux jeux de données différentes avec deux clés cryptographiques différentes. Pour cela, chaque jeu de donnée d'une série peut être transmis à deux sous-ensembles SE différents, chacun des sous-ensembles procédant à la génération d'une clé puis au chiffrement du jeu de données avec la clé générée. Au sein d'un sous-ensemble SE, un élément sécurisé peut opérer en série avec les aux autres éléments sécurisés qui opèrent en parallèle. L'élément sécurisé en série peut alors être un élément sécurisé maître configuré pour générer une clé cryptographique et segmenter les opérations de chiffrement en sous-opérations que les éléments sécurisés en parallèle, alors esclaves, exécutent ensuite à l'aide de la clé cryptographique générée qu'il leur a préalablement transmise.

Selon certains modes de réalisation, les éléments sécurisés alloués #1-1 ; ... ; #N-1 sont configurés pour stocker localement, en leur sein, les résultats d'une ou plusieurs opérations cryptographiques OC. Ces résultats peuvent des clés cryptographiques ou des données chiffrées et/ou déchiffrées qui seront ensuite mises à disposition pour traitement ultérieur par des éléments sécurisés alloués #1-1 ; ... ; #N-1 ou le contrôleur 1003 de module.

Selon certains modes de réalisation, le contrôleur 1003 de module est configuré pour communiquer avec au moins une base de donnée BDD et/ou au moins une application tierce APP associée à un client authentifié. La base de donnée BDD peut être localisée dans le contrôleur 1003 de module lui-même, dans le dispositif hôte 2001 ou dans un matériel distant associé au client authentifié. L'application tierce APP peut être tout type d'application qui requiert le résultat d'une opération cryptographique pour s'exécuter, traiter une transaction ou un jeu de données.

A titre d'exemple illustratif, l'application tierce APP peut être une application qui requiert une authentification d'un client authentifié à l'aide d'une empreinte numérique. L'application peut alors transmettre, via le contrôleur 1003 de module, l'empreinte numérique dont il dispose à un ou plusieurs éléments sécurisés alloués #1-1 ; ... ; #N-1 qui, à l'aide d'une opération cryptographique OC, procéderont à sa comparaison avec l'empreinte numérique d'une clé cryptographique spécifique dont ils disposent et qui a été préalablement utilisée pour enregistrer le client authentifié auprès de ladite application APP. Si les empreintes numériques correspondent, le contrôleur 1003 de module renvoie un signal de sortie de validation à l'application APP, et l'application APP peut s'exécuter. Si les empreintes numériques ne correspondent pas, le contrôleur 1003 de module renvoie un signal de sortir de non-validation à l'application APP, et l'application APP ne s'exécute pas.

Il est courant qu'une ou plusieurs clés cryptographiques soit utilisées de manière récurrente pour des opérations de chiffrement et de chiffrement, par exemple dans des opérations cryptographiques symétriques ou asymétriques répétées. Plutôt que générer ces clés à chaque opération ou chaque session des clients authentifiés, il est plus commode et plus économe pour une saine gestion des ressources de calcul de les stocker dans un espace mémoire non-volatile dédié, et de les récupérer selon les besoins. Or, par leur nature, éléments sécurisés possèdent une mémoire locale non-volatile limitée. Le nombre de clés cryptographiques susceptibles d'y être stockées est donc très limité. En outre, leur stockage dans un élément sécurisé n'est pas optimal car les clés stockées ne peuvent être exploités que par ledit élément sécurisé. Lorsque celui-ci n'est pas disponible, par exemple, lorsqu'il est affecté à une autre opération cryptographique, elles ne sont pas accessibles et ne peuvent être utilisées par un autre élément sécurisé.

Aussi, selon certains modes de réalisation, le contrôleur 1003 de module est configuré pour stocker les données de sortie DS d'une opération cryptographique OC réalisée par un ou plusieurs éléments sécurisés alloués #1-1 ; ... ; #N-1 dans une base de données BDD et/ou récupérer une donnée d'entrée DE depuis une base de donnée BDD pour traitement à l'aide d'une opération cryptographique OC exécutée par un ou plusieurs éléments sécurisés alloués #1-1 ; ... ; #N-1, ladite base de donnée BDD étant associée au client authentifié C#1 ; ... ; C#N auquel sont alloués lesdits éléments sécurisés #1-1 ; ... ; #N-1.

Ces modes de réalisation sont alors particulièrement avantageux pour la constitution d'un magasin des clés cryptographiques dédié à un client authentifié. Les éléments sécurisés alloués #1-1 ; ... ; #N-1 du module électronique 1000 sont pilotés pour générer des clés cryptographiques, qui, une fois chiffrées par la clé cryptographique maître unique CMK#1 ; ... ; CMK#N associé audit éléments sécurisés alloués #1-1 ; ... ; #N-1, sont exportées, via le contrôleur 1003 de module, dans une base de donnée BDD associée au client authentifié C#1 ; ... ; C#N auquel sont alloués lesdits éléments sécurisés #1-1 ; ... ; #N-1. Pour utiliser les clés cryptographiques afin, par exemple, de chiffrer ou déchiffrer un jeu de données, les clés cryptographiques de la base de donnée BDD associé à un client authentifié C#1 ; ... ; C#N sont importées, via le contrôleur 1003 de module, dans les éléments sécurisés alloués #1-1 ; ... ; #N-1. Les éléments sécurisés #1-1 ; ... ; #N-1 procèdent alors au déchiffrement des clés à l'aide de la clé cryptographique maître unique CMK#1 ; ... ; CMK#N associé et exécutent alors les opérations de chiffrement ou déchiffrement à l'aide desdites clés cryptographique importées une fois déchiffrées.

Outre le stockage de clés cryptographiques, la base de donnée BDD peut également contenir d'autres données, telles que des empreintes numériques ou biométriques, susceptibles d'être l'objet d'opérations cryptographiques par les éléments sécurisés alloués.

De préférence, les grappes 1005-1 ; ... ; 1005-6 d'éléments sécurisés 1006-1 ; ... ; 1006-6 sont agencées sur un ou plusieurs supports physiques. Des exemples de support physiques peuvent être des cartes électroniques avec un moyen de connexion du type PCI, PCI-Express, USB-A ou C. En particulier, un même support physique peut comprendre une ou plusieurs grappes d'éléments sécurisés. Pour faciliter la conception, il est préférable que les éléments d'une même grappe soient sur le même support physique.

Dans un deuxième aspect de l'invention, il est fourni un système comprenant
- un dispositif hôte 2001 ;
- un ou plusieurs modules électroniques 1000 selon l'un des quelconques modes de réalisation du premier aspect de l'invention et connectés au dispositif hôte 2001.

Le dispositif hôte 2001 peut être généralement une unité de traitement de données, telle qu'un terminal informatique client, par exemple un ordinateur particulier, connecté en réseau ou non, ou encore un serveur informatique permettant d'offrir des services à des clients distants.

Selon certains modes de réalisation, le dispositif hôte 2001 peut être un serveur comprenant une unité de traitement. Un ou plusieurs modules électroniques 1000 sont connectés au dispositif hôte selon tout moyen de connexion adapté, par exemple un moyen de connexion du type PCI, PCI-Express, USB-A ou C. Ces modes de réalisation sont particulièrement avantageux pour des implémentations du système selon l'invention dans une infrastructure électronique en nuage, en particulier dans une infrastructure électronique en nuage implémentée selon une architecture single-tenant ou multi-tenant, ou selon une architecture de virtualisation. Dans un troisième aspect de l'invention, il est fourni une méthode de configuration d'un module électronique 1000 selon l'un des quelconques modes de réalisation du premier aspect de l'invention. Ladite méthode comprend les étapes suivantes :
(a) enregistrer au moins un client parmi une liste de clients authentifiés C#1 ; ... ; C#N ;
(b) allouer, via le contrôleur 1003 de module, un ou plusieurs éléments sécurisés #1-1 ; ... ; #N-1 d'une ou plusieurs grappes 1005-1 ; ... ; 1005-6 d'éléments sécurisés 1006-1 ; ... ; 1006-6 à un unique client authentifié parmi la liste des clients authentifiés C#1 ; ... ; C#N;
(c) définir, via le contrôleur 1003 de module, une clé cryptographique maître unique CMK#1 ; ... ; CMK#N propre à l'un ou plusieurs éléments sécurisés #1-1 ; ... ; #N-1 alloués à l'étape (b);
(d) stocke, localement au sein de chaque élément sécurisé alloué #1-1 ; ... ; #N-1, la clé cryptographique maître unique CMK#1 ; ... ; CMK#N définie à l'étape (c).

A l'étape (a), l'enregistrement d'un client peut être réalisé selon toute procédure adaptée, notamment par l'enregistrement préalable de l'identité du client sous la forme d'une signature électronique et/ou d'un certificat électronique, puis la création d'identifiants électroniques associés au client pour l'établissement ultérieur de connexions au dispositif hôte 2001 ou au module 1003 électronique. A chaque connexion au dispositif hôte 2001 ou au module électronique 1000, l'identité du client est authentifiée à l'aide d'une méthode d'authentification adaptée, notamment telle que décrite dans le cadre du premier aspect de l'invention.

A l'étape (b), le nombre d'éléments sécurisés 1006-1 ; ... ; 1006-6 alloués à chaque client C#1 ; ... ; C#N peut être préalablement défini par le client lui-même selon ses besoins, ou par un fournisseur de ressources informatiques chez lequel le dispositif hôte 2001, et le module électronique 1000, est hébergé.

Comme décrit précédemment, les éléments sécurisés 1006-1 ; ... ; 1006-6 alloués à chaque client C#1 ; ... ; C#N peuvent être identifiés dans une base de données dans laquelle l'identifiant de chaque élément sécurisé est associé à un identifiant du client auquel il est alloué. Cette base de données, de préférence chiffrée, peut être stockée dans le dispositif hôte 2001 ou, de préférence, dans le contrôleur 1003 de module. Egalement, chaque élément sécurisé #1-1 ; ... ; #N-1 peut stocker, de préférence dans son enclave sécurisé, l'identifiant, ou une empreinte cryptographique, du client C#1 ; ... ; C#N auquel il est alloué. Cet identifiant, ou son empreinte cryptographique, peut alors être communiqué avec les instructions et/ou les données transmises par le contrôleur 1003 de module aux modules sécurisés alloués #1-1 ; ... ; #N-1 pour l'exécution d'une opération cryptographique OC. Les modules sécurisés peuvent être configurés pour vérifier l'identité du client, ou son empreinte cryptographique, avant l'exécution de l'opération cryptographique requise. A l'étape (c), la définition, via le contrôleur 1003 de module, d'une clé cryptographique maître unique CMK#1 ; ... ; CMK#N propre à un ou plusieurs éléments sécurisés alloués à l'étape (b) peut réalisée selon toute procédure adaptée. En particulier, cette définition peut être implémentée sous la forme d'une cérémonie des clés (« Key Ceremony » (KC)), de préférence en conformité avec selon les standards « Statement on Auditing Standards no.70 (SAS70) », « Statement on Standards for Attestation Engagements No.16 (SSAE 16) » et/ou encore « International Standard on Assurance Engagements 3402 (ISAE 3402) ».

A l'étape (d), la clé cryptographique maître unique CMK#1 ; ... ; CMK#N définie à l'étape (c) est stockée, localement au sein de chaque élément sécurisé alloué #1-1 ; ... ; #N-1. Pour des raisons de sécurité, la clé cryptographique maître unique CMK#1 ; ... ; CMK#N est, de préférence, stockée, en lecture seule, dans l'enclave sécurisée de chaque élément sécurisé alloué, de manière à ce qu'elle ne puisse pas être communiquée en dehors de l'élément sécurisé #1-1 ; ... ; #N-1. Elle peut être stockée de manière chiffrée par une clé spécifique propre à chaque élément sécurisé, elle-même stockée dans une enclave sécurisée, qui la déchiffrera au moment où il en aura besoin pour une opération cryptographique. Selon des modes préférés de réalisation, les étapes (c) à (d) de la méthode de configuration selon le deuxième aspect de de l'invention peuvent être implémentées à l'aide d'une méthode de réplication ou de clonage des éléments sécurisés #1-1 ; ... ; #N-1, en particulier lorsque que ces éléments sécurisés sont structurellement identiques.

Plus précisément, une fois les éléments sécurisés alloués #1-1 ; ... ; #N-1 à un client authentifié C#1 ; ... ; C#N, un premier élément sécurisé, appelé élément sécurisé maître, peut être sélectionné parmi ceux-là, puis sa configuration initialisée, notamment par l'implémentation de la clé cryptographique maître CMK#1 ; ... ; CMK#N définie à l'étape (c) et les identifiants du client le cas échéant. Cette configuration peut également comprendre l'installation et/ou le paramétrage d'applications, API et/ou programmes spécifiques de l'élément sécurisé. Une fois la configuration de l'élément sécurisé maître terminée, sa configuration est exportée vers le reste des éléments sécurisés, appelés éléments sécurisés esclaves. Les éléments sécurisés esclaves répliquent ou clonent ensuite la configuration reçue sous le contrôle de l'élément sécurisé maître. Dès lors que les éléments sécurisés esclaves ont terminé la réplication ou le clonage de la configuration, ceux-là renvoient un signal de sortie de terminaison du processus de réplication ou clonage à l'élément sécurisé maître. L'élément sécurisé maître peut être configuré pour recevoir le signal de sortie de terminaison de chaque élément sécurisé esclave, vérifier qu'il satisfait un certain nombre de critères, et valider que la réplication ou le clonage de la configuration de chaque élément sécurisé esclave est conforme à la sienne.

Selon certains modes de réalisation, la méthode peut comprendre en outre une étape après l'étape (d) de modification d'un nombre d'éléments sécurisés alloués #1-1 ; ... ; #N-1 audit client C#1 ; ... ; C#N à partir d'une requête dudit client C#1 ; ... ; C#N. Le module électronique peut ainsi être configuré de sorte que le client puisse, selon ses besoins, requérir l'allocation de nouveaux éléments sécurisés. Idéalement, lorsque ses besoins se réduisent, il peut aussi renoncer à certains éléments sécurisés qui lui ont été alloués afin de les mettre à disposition à d'autres clients authentifiés. Le ou les éléments sécurisés auquel il est ainsi renoncé par le client peuvent être alors, via le contrôleur de module, réinitialisés dans leur configuration d'origine, généralement appelée configuration d'usine. Ils sont alors disponibles et prêts pour une allocation à un autre client, notamment selon une procédure de réplication ou clonage telle que décrite précédemment.

Selon un quatrième aspect de l'invention, il est fourni une méthode de traitement de données dans un module électronique 1000 selon le premier aspect de l'invention, ladite méthode comprend les étapes suivantes :
(a) authentifier, via le contrôleur 1003 de module, une connexion d'un client C#1 ; ... ; C#N ;
(b) recevoir, via le contrôleur 1003 de module, de la part du client authentifié C#1 ; ... ; C#N une requête pour l'exécution d'une ou plusieurs opérations cryptographiques OC ;
(c) piloter, via le contrôleur 1003 de module, l'exécution de l'opération cryptographique OC par un ou plusieurs éléments sécurisés alloués audit client authentifié C#1 ; ... ; C#N;
(d) chiffrer, à l'aide de la clé cryptographique maître unique CMK#1 ; ... ; CMK#N, le ou les données de de sortie DS de opération cryptographique OC.

La méthode peut comprendre en outre, avant l'étape (c) :
(b1) recevoir, via le contrôleur 1003 de module, des données chiffrées d'entrée DE pour l'exécution de l'opération cryptographique OC ;
(b2) déchiffrer, à l'aide de la clé cryptographique maître unique CMK#1 ; ... ; CMK#N, les données d'entrée DE chiffrées reçues.

Selon le modèle de communication établi entre les éléments sécurisés alloués, les étapes de chiffrage / déchiffrage des étapes (b2) et (c) peuvent être exécutées par un ou plusieurs éléments sécurisés impliqués dans l'exécution de l'opération cryptographique OC pilotée par le contrôleur 1003 de module. Par exemple, dans la cas d'une organisation des éléments sécurisés alloués selon un modèle maître / esclave, l'élément sécurisé maître peut être désigné ou, alternativement, il peut désigner un ou plusieurs éléments sécurisés, pour exécuter le déchiffrement des données d'entrée DE reçues et/ou chiffrer le ou les données de sortie DS de l'opération cryptographique. Alternativement, dans le cas d'une organisation des éléments sécurisés fonctionnant en parallèle, chaque élément sécurisé des éléments sécurisés alloués et utilisés pour l'exécution de l'opération cryptographique OC exécute les opérations de déchiffrage et/ou chiffrage. Il aussi possible de désigner, par exemple via le contrôleur 1003 de module, un ou plusieurs éléments sécurisés pour les opérations de déchiffrage et/ou chiffrage, qui ne sont pas parties de ceux qui exécutent l'opération cryptographique de l'étape (c).

A titre d'exemple illustratif, la méthode de traitement selon le troisième aspect de l'invention peut permettre de générer des clés cryptographiques dédiées à un client authentifié, notamment pour la constitution d'un magasin de clés cryptographiques utilisées pour d'autres applications. Le client C#1 ; ... ; C#N, une fois authentifié, requiert, via le contrôleur 1003 de module, l'exécution d'une opération cryptographique OC de génération de plusieurs clés cryptographiques par chaque élément sécurisé alloué #1-1 ; ... ; #N-1. Chaque élément sécurisé alloué, sous le pilotage par le contrôleur 1003 de module, génère alors une clé cryptographie, à l'aide de tout algorithme cryptographique approprié, par exemple AES, DES ou une fonction de dérivation appliquée à la clé maître unique. Chaque clé cryptographique générée est ensuite chiffrée à l'aide de la clé cryptographique maître unique CMK#1 ; ... ; CMK#N par l'élément sécurisé qui l'a généré. Les clés cryptographiques générées, puis chiffrées peuvent ensuite être exportées, via le contrôleur de module dans une base de donnée associée au client authentifié.

Pour utiliser les clés cryptographiques afin de chiffrer ou déchiffrer un jeu de données, les clés cryptographiques de la base de donnée associé au client authentifié sont importés, via le contrôleur de module, dans les éléments sécurisés alloués. Les éléments sécurisés précèdent alors au déchiffrement des clés à l'aide de la clé cryptographique maître unique et exécutent alors les opérations de chiffrement ou déchiffrement à l'aide desdites clés cryptographique importées une fois déchiffrées.

Selon un cinquième aspect de l'invention, il est fourni un programme comprenant des instructions qui, lorsque le programme est exécuté par une unité de traitement de données, conduisent celui-ci à mettre en œuvre les étapes d'une méthode selon le deuxième et/ou le troisième aspect de l'invention.

Tout type de langage de programmation, compilé ou interprété, peut être utilisé pour mettre en œuvre les étapes de la méthode de l'invention. Le programme d'ordinateur peut faire partie d'une solution logicielle, c'est-à-dire d'un ensemble d'instructions exécutables, de codes, de scripts ou autres et/ou de bases de données logicielles. L'unité de traitement de données peut être le dispositif hôte 2001 ou le contrôleur 1003 de module.

Selon un sixième aspect de l'invention, il est fourni un support d'information lisible par une unité de traitement de données comprenant des instructions qui, lorsqu'elles sont exécutées par une unité de traitement de donnée, conduisent ladite unité de traitement à mettre en œuvre les étapes d'une méthode selon le deuxième et/ou le troisième aspect de l'invention.

Le support lisible par une unité de traitement de donnée est de préférence une mémoire non volatile, par exemple un disque dur ou un disque statique à semiconducteurs (« solid state drive », SSD). Le support lisible par ordinateur peut être un support de stockage amovible ou un support de stockage non amovible faisant partie d'un ordinateur. Il peut également être une mémoire non-volatile à l'intérieur d'un support amovible. Cela peut faciliter le déploiement de l'invention.

Le support lisible par une unité de traitement de donnée peut aussi faire partie d'un terminal, ou ordinateur, utilisé comme serveur à partir duquel des instructions exécutables peuvent être téléchargées et, lorsqu'elles sont exécutées par un ordinateur, faire en sorte que l'ordinateur exécute une méthode selon l'un des modes de réalisation décrits.

Le support lisible par une unité de traitement de donnée peut être dans le dispositif hôte 2001 ou le contrôleur 1003 de module.

Selon un septième aspect de l'invention, un module électronique 1000 selon le premier aspect de l'invention peut être avantageusement utilisé dans une infrastructure électronique en nuage, en particulier dans une infrastructure électronique en nuage implémentée selon une architecture single-tenant ou multi-tenant, ou selon une architecture de virtualisation.

Dans une infrastructure électronique en nuage, un module électronique 1000 selon le premier aspect de l'invention permet de mettre à disposition des éléments sécurisés en tant que services à des clients de l'infrastructure. Les éléments sécurisés alloués à un client le lui sont de manière exclusive, quasiment de manière physique. Cet avantage particulier de l'invention permet une protection accrue des données stockées et/ou générées par des clients. L'invention répond aux exigences de confidentialité et de sécurité dans l'échange de certaines informations sensibles, tout en étant suffisamment flexible et évolutive pour une gestion optimale des ressources physiques de l'infrastructure.

### Références

### Littérature brevet

US 9 355 280 B2 [BROADCOM CORP [US]] 31.05.2016.
EP 3 663 945 A1 [IDEMIA France [FR]] 10.06.2020.
WO 2014/159750 A1 [AMAZON TECH INC [US]] 02.10.2014.
WO 2015/069460 [MOTOROLA SOLUTIONS INC [US]] 14.05.2015.
WO 2016/099644 A1 [PRIVATE MACHINES INC [US]] 23.06.2016.
US 2020 045028 A1 [AMAZON TECH INC [US]] 06.02.2020.

### Littérature non-brevet

ISO 18033 :2022, Information security - Encryption algorithms.
ISO 19790:2012, Information technology - Security techniques - Security requirements for cryptographic modules.
ISO 24759:2017, Information technology - Security techniques - Test requirements for cryptographic modules.
ISO 15408:2022, Information security, cybersecurity and privacy protection - Evaluation criteria for IT security.
FIPS 140-3, Security Requirements for Cryptographic Modules, 2019
PKCS #5, Password-Based Cryptography Specification v2.0, 2000.
PKCS #11, Cryptographic Token Interface v3.0, 2020.
PKCS #15, Cryptographic Token Information Syntax Standard, 1999.
ISO/IEC 7816-15:2016 Identification cards - Integrated circuit cards - Part 15: Cryptographic information application.
SAS 70 - Statement on Auditing Standards no.70
SSAE 16 / 18 - Statement on Standards for Attestation Engagements No.16 / 18.
ISAE 3402 - International Standard on Assurance Engagements 3402
CC:2022 - Common Criteria for Information Technology Security Evaluation, CCMB-2022-11-005, 2022.

## Revendications

1. Module électronique (1000) connectable à un dispositif hôte (2001), ledit module électronique (1000) comprend :
- une ou plusieurs grappes (1005-1 ; ... ; 1005-6) d'éléments sécurisés (1006-1 ; ... ; 1006-6), chacun des éléments sécurisés (1006-1 ; ... ; 1006-6) d'une même grappe (1005-1 ; ... ; 1005-6) est connecté à un bus commun (1007-1 ; ... ; 1007-6) de communication associé à ladite grappe (1005-1 ; ... ; 1005-6) ;
- un contrôleur (1003) de module électronique configuré pour, d'une part, communiquer, avec le dispositif hôte (2001) et avec le bus commun (1007-1 ; ... ; 1007-6) de communication de chacune de grappes (1005-1 ; ... ; 1005-6), et d'autre part, pour piloter l'exécution d'opérations cryptographiques par un ou plusieurs éléments sécurisés (1006-1 ; ... ; 1006-6) ;
dans lequel :
- le contrôleur (1003) de module est en outre configuré pour allouer un ou plusieurs éléments sécurisés (#1-1 ; ... ; #N-1) d'une ou plusieurs grappes (1005-1 ; ... ; 1005-6) à plusieurs clients authentifiés (C#1 ; ... ; C#N), chacun des éléments sécurisés alloués (#1-1 ; ... ; #N-1) à chaque client authentifié 'C#1 ; ... ; C#N) stocke localement une clé cryptographique maître unique (CMK#1 ; ... ; CMK#N) propre à chacun desdits clients authentifiés (C#1 ; ... ; C#N) ;
- chacun des éléments sécurisés alloués (#1-1 ; ... ; #N-1) à chacun des clients authentifiés (C#1 ; ... ; C#N) met en œuvre une opération cryptographique (OC) à l'aide d'une clé cryptographique spécifique (SK-#1-1 ; ... ; SK#N-1) à chacun des éléments sécurisés alloués (#1-1 ; ... ; #N-1) ;
- chacun des éléments sécurisés alloués (#1-1 ; ... ; #N-1) à chacun des clients authentifiés (C#1 ; ... ; C#N) est configuré pour déchiffrer les données d'entrée (DE) de l'opération cryptographique (OC) et/ou pour chiffrer les données de sortie (DS) de l'opération cryptographique (OC) à l'aide de la clé cryptographique maître unique (CMK#1 ; ... ; CMK#N).

2. Module (1000) selon la revendication 1, tel que le contrôleur (1003) de module est configuré pour piloter, pour un ou plusieurs clients authentifiés (C#1 ; ... ; C#N), l'exécution de l'opération cryptographique (OC) par un sous-ensemble (SE) d'éléments sécurisés choisis parmi les éléments sécurisés (#1-1 ; ... ; #N-1) alloués auxdits clients authentifiés (C#1 ; ... ; C#N).

3. Module (1000) selon la revendication 2, tel que contrôleur (1003) de module est configuré pour piloter, pour un ou plusieurs clients authentifiés (C#1 ; ... ; C#N), l'exécution d'une pluralité d'opérations cryptographiques (OC) par des sous-ensembles (SE) d'éléments sécurisés choisis parmi les éléments sécurisés (#1-1 ; ... ; #N-1) alloués auxdits clients authentifiés (C#1 ; ... ; C#N), chacune des opérations cryptographiques (OC) étant respectivement exécutée par un des sous-ensembles (SE) d'éléments sécurisés et le nombre d'éléments sécurisés de chacun des sous-ensembles étant défini par lesdits clients authentifiés (C#1 ; ... ; C#N).

4. Module (1000) selon la revendication 3, telles que les opérations cryptographiques (OC) sont exécutées en parallèle et/ou en série par chacun des sous-ensembles (SE) d'éléments sécurisés.

5. Module (1000) selon l'une quelconque des revendications 1 à 4, tel que les éléments sécurisés alloués (#1-1 ; ... ; #N-1) sont configurés pour stocker localement, en leur sein, les résultats d'une ou plusieurs opérations cryptographiques (OC).

6. Module (1000) selon l'une quelconque des revendications 1 à 5, tel que le contrôleur (1003) de module est configuré pour communiquer avec au moins une base de données (BDD) et/ou au moins une application tierce (APP) associée à un client authentifié.

7. Module (1000) selon la revendication 6, tel que le contrôleur (1003) de module est configuré pour stocker les données de sortie (DS) d'une opération cryptographique (OC) réalisée par un ou plusieurs éléments sécurisés alloués (#1-1 ; ... ; #N-1) dans une base de données (BDD) et/ou récupérer une donnée d'entrée (DE) depuis une base de donnée (BDD) pour traitement à l'aide d'une opération cryptographique (OC) exécutée par un ou plusieurs éléments sécurisés alloués (#1-1 ; ... ; #N-1), ladite base de donnée BDD étant associée au client authentifié (C#1 ; ... ; C#N) auquel sont alloués lesdits éléments sécurisés (#1-1 ; ... ; #N-1).

8. Module (1000) selon l'une quelconque des revendications 1 à 7, tel que les grappes (1005-1 ; ... ; 1005-6) d'éléments sécurisés (1006-1 ; ... ; 1006-6) sont agencés sur une ou plusieurs supports physiques.

9. Système comprenant :
- un dispositif hôte (2001) ;
- un ou plusieurs modules électroniques (1000) selon l'une quelconque des revendications 1 à 8 et connectés au dispositif hôte (2001).

10. Méthode de configuration d'un module électronique (1000) selon l'une des revendications 1 à 9, ladite méthode comprend les étapes suivantes :
(a) enregistrer au moins un client parmi une liste de clients authentifiés (C#1 ; ... ; C#N) ;
(b) allouer, via le contrôleur (1003) de module, un ou plusieurs éléments sécurisés (#1-1 ; ... ; #N-1) d'une ou plusieurs grappes (1005-1 ; ... ; 1005-6) d'éléments sécurisés (1006-1 ; ... ; 1006-6) à un unique client authentifié parmi la liste des clients authentifiés (C#1 ; ... ; C#N) ;
(c) définir, via le contrôleur (1003) de module, une clé cryptographique maître unique (CMK#1 ; ... ; CMK#N) propre à l'un ou plusieurs éléments sécurisés (#1-1 ; ... ; #N-1) alloués à l'étape (b);
(d) stocke, localement au sein de chaque élément sécurisé alloué (#1-1 ; ... ; #N-1), la clé cryptographique maître unique (CMK#1 ; ... ; CMK#N) définie à l'étape (c).

11. Méthode de configuration selon la revendication 10, telle qu'elle comprend en outre une étape après l'étape (d) de modification d'un nombre d'éléments sécurisés alloués (#1-1 ; ... ; #N-1) audit client (C#1 ; ... ; C#N) à partir d'une requête dudit client (C#1 ; ... ; C#N).

12. Méthode de traitement de données dans un module électronique (1000) selon l'une des revendications 1 à 9, ladite méthode comprend les étapes suivantes :
(a) authentifier, via le contrôleur (1003) de module, une connexion d'un client (C#1 ; ... ; C#N) ;
(b) recevoir, via le contrôleur (1003) de module, de la part du client authentifié (C#1 ; ... ; C#N) une requête pour l'exécution d'une ou plusieurs opérations cryptographiques (OC) ;
(c) piloter, via le contrôleur (1003) de module, l'exécution de l'opération cryptographique (OC) par un ou plusieurs éléments sécurisés alloués audit client authentifié (C#1 ; ... ; C#N) ;
(d) chiffrer, à l'aide de la clé cryptographique maître unique (CMK#1 ; ... ; CMK#N), le ou les données de de sortie (DS) de opération cryptographique (OC).

13. Programme comprenant des instructions qui, lorsque le programme est exécuté par une unité de traitement de donnée, conduisent celui-ci à mettre en œuvre les étapes d'une méthode selon l'une quelconque des revendications 10 à 12.

14. Support d'information lisible par une unité de traitement de donnée comprenant des instructions qui, lorsqu'elles sont exécutées par une unité de traitement de donnée, conduisent ladite unité de traitement à mettre en œuvre les étapes d'une méthode selon l'une quelconque des revendications 10 à 12.

15. Utilisation d'un module électronique (1000) selon l'une des revendications 1 à 9 dans une infrastructure électronique en nuage, en particulier dans une infrastructure électronique en nuage implémentée selon une architecture single-tenant ou multi-tenant, ou selon une architecture de virtualisation.

## Patentansprüche

1. Elektronisches Modul (1000), das an eine Host-Vorrichtung (2001) anschließbar ist, wobei das elektronische Modul (1000) umfasst:
- einen oder mehrere Cluster (1005-1; ...; 1005-6) aus sicheren Elementen (1006-1; ...; 1006-6), wobei jedes der sicheren Elemente (1006-1; ...; 1006-6) eines selben Clusters (1005-1; ...; 1005-6) an einen gemeinsamen Kommunikationsbus (1007-1; ...; 1007-6) angeschlossen ist, der dem Cluster (1005-1; ...; 1005-6) zugeordnet ist;
- eine Modulsteuerung (1003) des elektronischen Moduls, die dazu konfiguriert ist, zum einen mit der Host-Vorrichtung (2001) und mit dem gemeinsamen Kommunikationsbus (1007-1; ...; 1007-6) jedes der Cluster (1005-1; ...; 1005-6) zu kommunizieren und zum anderen die Ausführung von kryptografischen Vorgängen durch ein oder mehrere sichere Elemente (1006-1; ...; 1006-6) zu steuern;
wobei:
die Modulsteuerung (1003) ferner dazu konfiguriert ist, ein oder mehrere sichere Elemente (#1-1; ...; #N-1) eines oder mehrerer Cluster (1005-1; ...; 1005-6) mehreren authentifizierten Kunden (C#1; ...; C#N) zuzuweisen, wobei jedes der sicheren Elemente (#1-1; ...; #N-1), die jedem authentifizierten Kunden (C#1; ...; C#N) zugewiesen sind, lokal einen eindeutigen kryptografischen Master-Schlüssel (CMK#1; ...; CMK#N) speichert, der jedem der authentifizierten Kunden (C#1; ...; C#N) eigen ist;
- jedes der sicheren Elemente (#1-1; ...; #N-1), die jedem der authentifizierten Kunden (C#1; ...; C#N) zugewiesen sind, einen kryptografischen Vorgang (OC) mithilfe eines spezifischen kryptografischen Schlüssels (SK-#1-1; ...; SK#N-1) für jedes der zugewiesenen sicheren Elemente (#1-1; ...; #N-1) durchführt;
jedes der sicheren Elemente (#1-1; ...; #N-1), die jedem der authentifizierten Kunden (C#1; ...; C#N) zugewiesen sind, dazu konfiguriert ist, mithilfe des eindeutigen kryptografischen Master-Schlüssels (CMK#1; ...; CMK#N) die Eingangsdaten (DE) des kryptografischen Vorgangs (OC) zu entschlüsseln und/oder die Ausgangsdaten (DS) des kryptografischen Vorgangs (OC) zu verschlüsseln.

2. Modul (1000) nach Anspruch 1, wobei die Modulsteuerung (1003) dazu konfiguriert ist, für einen oder mehrere authentifizierte Kunden (C#1; ...; C#N) die Ausführung des kryptografischen Vorgangs (OC) durch eine Teilmenge (SE) von sicheren Elementen zu steuern, die unter den den authentifizierten Kunden (C#1; ...; C#N) zugewiesenen sicheren Elementen (#1-1; ...; #N-1) gewählt sind.

3. Modul (1000) nach Anspruch 2, wobei die Modulsteuerung (1003) dazu konfiguriert ist, für einen oder mehrere authentifizierte Kunden (C#1; ...; C#N) die Ausführung einer Mehrzahl von kryptografischen Vorgängen (OC) durch Teilmengen (SE) von sicheren Elementen, die aus unter den den authentifizierten Kunden (C#1; ...; C#N) zugewiesenen sicheren Elementen (#1-1; ...; #N-1) gewählt sind, zu steuern, wobei jeder der kryptografischen Vorgänge (OC) jeweils durch eine der Teilmengen (SE) von sicheren Elementen ausgeführt wird und wobei die Anzahl von sicheren Elementen jeder der Teilmengen durch die authentifizierten Kunden (C#1; ...; C#N) definiert wird.

4. Modul (1000) nach Anspruch 3, wobei die kryptografischen Vorgänge (OC) durch jede Teilmenge (SE) von sicheren Elementen parallel und/oder seriell ausgeführt werden.

5. Modul (1000) nach einem der Ansprüche 1 bis 4, wobei die zugewiesenen sicheren Elemente (#1-1; ...; #N-1) dazu konfiguriert sind, die Ergebnisse eines oder mehrerer kryptografischer Vorgänge (OC) lokal in sich zu speichern.

6. Modul (1000) nach einem der Ansprüche 1 bis 5, wobei die Modulsteuerung (1003) dazu konfiguriert ist, mit mindestens einer Datenbank (BDD) und/oder mindestens einer Drittanbieteranwendung (App), die einem authentifizierten Kunden zugeordnet ist, zu kommunizieren.

7. Modul (1000) nach Anspruch 6, wobei die Modulsteuerung (1003) dazu konfiguriert ist, die Ausgangsdaten (DS) eines kryptografischen Vorgangs (OC), der durch ein oder mehrere zugewiesene sichere Elemente (#1-1; ...; #N-1) ausgeführt wird, in einer Datenbank (BDD) zu speichern und/oder aus einer Datenbank (BDD) ein Eingabedatum (DE) zurückzuholen zur Verarbeitung mithilfe eines kryptografischen Vorgangs (OC), der durch ein oder mehrere zugewiesene sichere Elemente (#1-1; ...; #N-1) ausgeführt wird, wobei die Datenbank BDD dem authentifizierten Kunden (C#1; ...; C#N) zugeordnet ist, dem die sicheren Elemente (#1-1; ...; #N-1) zugewiesen sind.

8. Modul (1000) nach einem der Ansprüche 1 bis 7, wobei die Cluster (1005-1; ...; 1005-6) aus sicheren Elementen (1006-1; ...; 1006-6) auf einem oder mehreren physischen Medien angeordnet sind.

9. System, umfassend:
- eine Host-Vorrichtung (2001);
- ein oder mehrere elektronische Module (1000) nach einem der Ansprüche 1 bis 8, die an die Host-Vorrichtung (2001) angeschlossen sind.

10. Verfahren zur Konfiguration eines elektronischen Moduls (1000) nach einem der Ansprüche 1 bis 9, wobei das Verfahren die folgenden Schritte umfasst:
(a) Registrieren mindestens eines Kunden in einer Liste authentifizierter Kunden (C#1; ...; C#N);
(b) Zuweisen, über die Modulsteuerung (1003), von einem oder mehreren sicheren Elementen (#1-1; ...; #N-1) eines oder mehrerer Cluster (1005-1; ...; 1005-6) aus sicheren Elementen (1006-1; ...; 1006-6) zu einem einzigen authentifizierten Kunden aus der Liste authentifizierter Kunden (C#1; ...; C#N);
(c) Definieren, über die Modulsteuerung (1003), eines eindeutigen kryptografischen Master-Schlüssels (CMK#1; ...; CMK#N), der einem oder mehreren im Schritt (b) zugewiesenen sicheren Elementen (#1-1; ...; #N-1) eigen ist;
(d) lokales Speichern des im Schritt (c) definierten eindeutigen kryptografischen Master-Schlüssels (CMK#1; ...; CMK#N) in jedem zugewiesenen sicheren Element (#1-1; ...; #N-1).

11. Verfahren zur Konfiguration nach Anspruch 10, wobei es ferner nach dem Schritt (d) einen Schritt des Änderns einer Anzahl von sicheren Elementen (#1-1; ...; #N-1), die dem Kunden (C#1; ...; C#N) zuwiesen sind, ausgehend von einer Anforderung des Kunden (C#1; ...; C#N) umfasst.

12. Verfahren zur Verarbeitung von Daten in einem elektronischen Modul (1000) nach einem der Ansprüche 1 bis 9, wobei das Verfahren die folgenden Schritte umfasst:
(a) Authentifizieren, über die Modulsteuerung (1003), einer Verbindung eines Kunden (C#1; ...; C#N);
(b) Empfangen, über die Modulsteuerung (1003), einer Anforderung zur Ausführung eines oder mehrerer kryptografischer Vorgänge (OC) von dem authentifizierten Kunden (C#1; ...; C#N);
(c) Steuern, über die Modulsteuerung (1003), der Ausführung des kryptografischen Vorgangs (OC) durch ein oder mehrere dem authentifizierten Kunden (C#1; ...; C#N) zugewiesene sichere Elemente;
(d) Verschlüsseln, der Ausgangsdaten (DS) des kryptografischen Vorgangs (OC) mithilfe des eindeutigen kryptografischen Master-Schlüssels (CMK#1; ...; CMK#N).

13. Programm, das Anweisungen umfasst, die bei der Ausführung des Programms durch eine Datenverarbeitungseinheit diese veranlassen, die Schritte eines Verfahrens nach einem der Ansprüche 10 bis 12 durchzuführen.

14. Informationsmedium, das von einer Datenverarbeitungseinheit lesbar ist und Anweisungen umfasst, die bei ihrer Ausführung durch eine Datenverarbeitungseinheit die Verarbeitungseinheit veranlassen, die Schritte eines Verfahrens nach einem der Ansprüche 10 bis 12 durchzuführen.

15. Verwendung eines elektronischen Moduls (1000) nach einem der Ansprüche 1 bis 9 in einer elektronischen Cloud-Infrastruktur, insbesondere in einer gemäß einer Single-Tenant- oder Multi-Tenant-Architektur oder gemäß einer Virtualisierungsarchitektur implementierten elektronischen Cloud-Infrastruktur.

## Claims

1. Electronic module (1000) able to be connected to a host device (2001), said electronic module (1000) comprising:
- one or more clusters (1005-1; ...; 1005-6) of secure elements (1006-1; ...; 1006-6), each of the secure elements (1006-1; ...; 1006-6) of one and the same cluster (1005-1; ...; 1005-6) being connected to a common communication bus (1007-1; ...; 1007-6) associated with said cluster (1005-1; ... ; 1005-6);
- an electronic module controller (1003) configured, on the one hand, to communicate with the host device (2001) and with the common communication bus (1007-1; ...; 1007-6) of each of the clusters (1005-1; ...; 1005-6) and, on the other hand, to control the execution of cryptographic operations by one or more secure elements (1006-1; ...; 1006-6);
wherein:
- the module controller (1003) is furthermore configured to allocate one or more secure elements (#1-1; ...; #N-1) of one or more clusters (1005-1; ...; 1005-6) to a plurality of authenticated clients (C#1; ...; C#N), each of the secure elements (#1-1; ...; #N-1) allocated to each authenticated client (C#1; ...; C#N) locally storing a unique master cryptographic key (CMK#1; ...; CMK#N) specific to each of said authenticated clients (C#1; ...; C#N);
- each of the secure elements (#1-1; ...; #N-1) allocated to each of the authenticated clients (C#1; ...; C#N) implements a cryptographic operation (OC) using a cryptographic key (SK-#1-1; ...; SK#N-1) specific to each of the allocated secure elements (#1-1; ...; #N-1);
- each of the secure elements (#1-1; ...; #N-1) allocated to each of the authenticated clients (C#1; ...; C#N) is configured to decrypt the input data (DE) of the cryptographic operation (OC) and/or to encrypt the output data (DS) of the cryptographic operation (OC) using the unique master cryptographic key (CMK#1; ...; CMK#N).

2. Module (1000) according to Claim 1, such that the module controller (1003) is configured, for one or more authenticated clients (C#1; ...; C#N), to control the execution of the cryptographic operation (OC) by a subset (SE) of secure elements chosen from among the secure elements (#1-1; ...; #N-1) allocated to said authenticated clients (C#1; ...; C#N).

3. Module (1000) according to Claim 2, such that the module controller (1003) is configured, for one or more authenticated clients (C#1; ...; C#N), to control the execution of a plurality of cryptographic operations (OC) by subsets (SE) of secure elements chosen from among the secure elements (#1-1; ...; #N-1) allocated to said authenticated clients (C#1; ...; C#N), each of the cryptographic operations (OC) being respectively executed by one of the subsets (SE) of secure elements, and the number of secure elements of each of the subsets being defined by said authenticated clients (C#1; ...; C#N).

4. Module (1000) according to Claim 3, such that the cryptographic operations (OC) are executed in parallel and/or in series by each of the subsets (SE) of secure elements.

5. Module (1000) according to any one of Claims 1 to 4, such that the allocated secure elements (#1-1; ...; #N-1) are configured to locally internally store the results of one or more cryptographic operations (OC).

6. Module (1000) according to any one of Claims 1 to 5, such that the module controller (1003) is configured to communicate with at least one database (BDD) and/or at least one third-party application (APP) associated with an authenticated client.

7. Module (1000) according to Claim 6, such that the module controller (1003) is configured to store the output data (DS) of a cryptographic operation (OC) carried out by one or more allocated secure elements (#1-1; ...; #N-1) in a database (BDD) and/or retrieve an input datum (DE) from a database (BDD) for processing by way of a cryptographic operation (OC) executed by one or more allocated secure elements (#1-1; ...; #N-1), said database (BDD) being associated with the authenticated client (C#1; ...; C#N) to which said secure elements (#1-1; ...; #N-1) are allocated.

8. Module (1000) according to any one of Claims 1 to 7, such that the clusters (1005-1; ...; 1005-6) of secure elements (1006-1; ...; 1006-6) are arranged on one or more physical media.

9. System comprising:
- a host device (2001);
- one or more electronic modules (1000) according to any one of Claims 1 to 8 and connected to the host device (2001).

10. Method for configuring an electronic module (1000) according to one of Claims 1 to 9, said method comprising the following steps:
(a) registering at least one client in a list of authenticated clients (C#1; ...; C#N);
(b) allocating, via the module controller (1003), one or more secure elements (#1-1; ...; #N-1) of one or more clusters (1005-1; ...; 1005-6) of secure elements (1006-1; ...; 1006-6) to a single authenticated client from the list of authenticated clients (C#1; ...; C#N);
(c) defining, via the module controller (1003), a unique master cryptographic key (CMK#1; ...; CMK#N) specific to the one or more secure elements (#1-1; ...; #N-1) allocated in step (b);
(d) storing, locally within each allocated secure element (#1-1; ...; #N-1), the unique master cryptographic key (CMK#1; ...; CMK#N) defined in step (c).

11. Configuration method according to Claim 10, such that it furthermore comprises a step, after step (d), of modifying a number of secure elements (#1-1; ...; #N-1) allocated to said client (C#1; ...; C#N) based on a request from said client (C#1; ...; C#N).

12. Method for processing data in an electronic module (1000) according to one of Claims 1 to 9, said method comprising the following steps:
(a) authenticating, via the module controller (1003), a connection of a client (C#1; ...; C#N);
(b) receiving, via the module controller (1003), from the authenticated client (C#1; ...; C#N), a request to execute one or more cryptographic operations (OC);
(c) controlling, via the module controller (1003), the execution of the cryptographic operation (OC) by one or more secure elements allocated to said authenticated client (C#1; ...; C#N);
(d) encrypting, using the unique master cryptographic key (CMK#1; ...; CMK#N), the one or more output data (DS) of the cryptographic operation (OC).

13. Program comprising instructions that, when the program is executed by a data processing unit, cause the latter to implement the steps of a method according to any one of Claims 10 to 12.

14. Information medium able to be read by a data processing unit and comprising instructions that, when executed by a data processing unit, cause said processing unit to implement the steps of a method according to any one of Claims 10 to 12.

15. Use of an electronic module (1000) according to one of Claims 1 to 9 in a cloud electronic infrastructure, in particular in a cloud electronic infrastructure implemented with a single-tenant or multi-tenant architecture, or with a virtualization architecture.
